# EUROPÄISCHE PATENTANMELDUNG

(11) **EP 2 824 003 A2**
(43) Veröffentlichungstag der Anmeldung: **14.01.2015**
(21) Anmeldenummer: 14172730.5
(22) Anmeldetag: 17.06.2014
(51) Int. Cl.: B60R 25/30

(54) **Verfahren zum Ausrüsten eines Fahrzeugs mit einem Steuergerät**

(30) Priorität: 11.07.2013 DE 102013213597
(71) Anmelder: Volkswagen Aktiengesellschaft, 38440 Wolfsburg (DE)
(72) Erfinder: Kessels, Joost, Dr., 38104 Braunschweig (DE); de Kock, Konrad, 7550 Durbanville (ZA); Liebenberg, Derek John, 6001 Port Elizabeth (ZA); Keevy, Christine, 6001 Port Elizabeth (ZA); Mxoli, Bathandwa, 6011 Port Elizabeth (ZA); du Plessis, Jacques, 6011 Port Elizabeth (ZA)

(57) **Zusammenfassung**

Die vorliegende Erfindung betrifft ein Verfahren (100) zum Ausrüsten eines Fahrzeugs (10) mit einem Steuergerät (12). Das Steuergerät (12) umfasst eine erste Verbindungsvorrichtung (70), welche mit einer zweiten Verbindungsvorrichtung (40) des Fahrzeugs koppelbar ist, um mehrere elektrische Leitungen (30-34) des Fahrzeugs (10) mit dem Steuergerät (12) elektrisch zu koppeln. Die zweite Verbindungsvorrichtung (40) umfasst mehrere elektrische Kontakte (50-54), welche jeweils mit einer elektrischen Leitung (30-34) der mehreren elektrischen Leitungen verbunden sind. Bei dem Verfahren (100) wird eine fahrzeugseitige Zuordnung bestimmt, welche definiert, welche elektrische Leitung (30-34) mit welchem elektrischen Kontakt (50-54) der zweiten Verbindungsvorrichtung (40) verbunden ist. In Abhängigkeit von der fahrzeugseitigen Zuordnung wird das Steuergerät (12) bereitgestellt.

## Beschreibung

Die vorliegende Erfindung betrifft ein Verfahren zum Ausrüsten eines Fahrzeugs mit einem Steuergerät sowie ein entsprechendes Steuergerät, um einen Diebstahlschutz des Fahrzeugs zu erhöhen.

Bei modernen Fahrzeugen, wie z.B. Personenkraftwagen oder Lastkraftwagen, wird ein Diebstahlschutz durch verschiedene Maßnahmen erreicht oder verbessert. Eine Maßnahme betrifft Steuergeräte des Fahrzeugs, insbesondere Motorsteuergeräte oder Getriebesteuergeräte. Um den Motor oder das Getriebe in Betrieb nehmen zu können, ist beispielsweise eine Authentifizierung mit Hilfe eines Transponders, welcher in einem Fahrzeugschlüssel angeordnet ist, erforderlich. Wenn eine nicht autorisierte Person keinen geeigneten Fahrzeugschlüssel besitzt, verweigert das Steuergerät den Dienst und ein Starten oder Betreiben des Fahrzeugs kann dadurch verhindert werden. Um dies zu umgehen, verwenden nicht autorisierte Personen, wie z.B. ein Fahrzeugdieb, häufig manipulierte Steuergeräte, welche sie statt der Original-Steuergeräte in das Fahrzeug einsetzen. Da die Steuergeräte üblicherweise über Steckverbinder mit dem Fahrzeug gekoppelt sind, sind sie einfach und schnell austauschbar, so dass das manipulierte Steuergerät verhältnismäßig schnell von der nicht autorisierten Person oder dem Fahrzeugdieb eingesetzt werden kann. Das manipulierte Steuergerät benötigt entweder keine Authentifizierung oder der Fahrzeugdieb verfügt über entsprechende Authentifizierungsmechanismen, so dass er das Fahrzeug nach dem Austausch des Steuergeräts starten und verwenden kann.

In diesem Zusammenhang offenbart die DE 20 2005 021 674 U1 eine Zwangsauthentifizierung für elektronische Vorrichtungen. Eine tragbare elektronische Vorrichtung umfasst eine Medienspeichervorrichtung, die einen Medieninhalt für ein oder mehrere Medienelemente speichert, ein Mediendarstellungsmodul, das einen Medieninhalt für zumindest eines der Medienelemente von dem Medienspeicher abruft und bewirkt, dass der Medieninhalt für einen Benutzer der tragbaren elektronischen Vorrichtung dargestellt wird, und eine Authentifizierungstabelle, die Authentifizierungsinformationen für verschiedene Zubehörvorrichtungen speichert, die autorisiert sind, um mit der tragbaren elektronischen Vorrichtung zusammenzuwirken, wobei die Authentifizierungsinformationen Informationen umfassen, die einen Umfang angeben, in dem jede Zubehörvorrichtung zur Zusammenarbeit mit der tragbaren elektronischen Vorrichtung autorisiert ist. Die elektronische Vorrichtung umfasst ferner ein Authentifizierungsmodul, welches auf der Basis zumindest eines Teils der in der Authentifizierungstabelle gespeicherten Authentifizierungsinformationen feststellt, ob eine spezielle Zubehörvorrichtung, welche mit der tragbaren Medienvorrichtung gekoppelt wird, autorisiert ist, um mit der tragbaren elektronischen Vorrichtung zusammenzuarbeiten.

Weiterhin ist aus der DE 101 03 200 A1 eine Versorgungsvorrichtung zur Versorgung einer Verbrauchervorrichtung bekannt. Die Versorgungsvorrichtung weist eine Erkennungseinrichtung auf, welche die Art der Verbrauchervorrichtung automatisch erkennt und der Verbrauchervorrichtung selbsttätig eine angepasste Spannung, Stromstärke und Frequenz zur Verfügung stellt.

Aus der EP 0 345 493 A1 ist eine Anordnung zur Überwachung, Steuerung und Regelung einer betriebstechnischen Anlage eines Gebäudeautomatisationssystems bekannt. Die Anordnung umfasst ein bedienseitiges Kontrollmodul und ein Funktionsmodul, die über eine mindestens eine Busschiene enthaltende Busverbindung elektrisch miteinander verbunden sind, um Adressen, Daten und Versorgungsspannungen zu übertragen. Auf einer der Busschienen ist mindestens ein Funktionsmodul angeordnet, welches einerseits mit Leitern dieser Busschiene und andererseits zwecks Übertragung von Prozessgrößen mit Steuer- und/oder Meldeeinrichtungen der betriebstechnischen Anlagen elektrisch verbunden ist. Das Funktionsmodul ist zugleich Eingangs- und/oder Ausgangsklemme der Anordnung, so dass diese elektrischen Anschlüsse des Funktionsmoduls unmittelbar mit Anschlussklemmen der betriebstechnischen Anlage verbunden werden können.

Weiterhin ist in dem Stand der Technik aus der WO 2002/077828 A2 ein Verfahren zur Herstellung einer Datenverbindung zwischen einem Peripheriegerät und einer Rechnereinheit bekannt. Dabei wird über einen rechnerseitigen Anschlussport und über einen peripherieseitigen Anschlussport eine Datenverbindung hergestellt. Die Datenverbindung wird durch ein Datenkabel mit zu den Anschlussports korrespondierenden Steckern gewährleistet und bei unterschiedlichen Schnittstellentechnologien der Anschlussports ist in der Datenverbindung eine Konvertierungsvorrichtung implementiert, welche entsprechend der Richtung des Datentransfers von der einen Schnittstellentechnologie in die andere eine Konvertierung durchführt.

Ferner ist aus der US 6,640,271 B2 eine Maschinensteuerung bekannt, welche einen Verbinder aufweist, welcher Anschlussstifte aufweist, welche eine elektrische Verbindung zwischen Vorrichtungen außerhalb der Steuerung und internen elektrischen Komponenten bereitstellen. Ein Programmierwerkzeug wird verwendet, um die Steuerung zu programmieren, um bestimmten Anschlussstiften zuzuordnen, bestimmte Signale zu übertragen oder zu empfangen.

Die WO 01/27731 A1 betrifft ein Verfahren zum Verbessern einer Schnittstelle zwischen einem Host und einem Modul an einem Einsatzpunkt, welche parallele Signalpfade aufweist, welche parallele Signale eines Transportstroms tragen. Die parallelen Signale arbeiten bei einer parallelen Taktrate. Eine Schnittstellenkarte weist einen seriellen Abschnitt auf, um serielle Signalpfade bereitzustellen, welche serielle Signale zwischen dem Host und dem Modul übertragen. Jedes der seriellen Signale entspricht den parallelen Signalen. Jedes der seriellen Signale arbeitet bei einer seriellen Taktrate.

Aufgabe der vorliegenden Erfindung ist es, einen verbesserten Diebstahlschutz für ein Fahrzeug bereitzustellen.

Diese Aufgabe wird gemäß der vorliegenden Erfindung durch ein Verfahren zum Ausrüsten eines Fahrzeugs mit einem Steuergerät nach Anspruch 1, ein Steuergerät für ein Fahrzeug nach Anspruch 9 und ein Fahrzeug nach Anspruch 10 gelöst. Die abhängigen Ansprüche definieren bevorzugte und vorteilhafte Ausführungsformen der Erfindung.

Gemäß der vorliegenden Erfindung wird ein Verfahren zum Ausrüsten eines Fahrzeugs mit einem Steuergerät bereitgestellt. Das Steuergerät umfasst eine erste Verbindungsvorrichtung, welche mit einer zweiten Verbindungsvorrichtung, welche dem Fahrzeug zugeordnet ist, koppelbar ist. Wenn das Steuergerät mit dem Fahrzeug durch Koppeln der ersten Verbindungsvorrichtung mit der zweiten Verbindungsvorrichtung verbunden ist, werden über die erste und zweite Verbindungsvorrichtung mehrere elektrische Leitungen des Fahrzeugs mit dem Steuergerät elektrisch gekoppelt. Die zweite Verbindungsvorrichtung umfasst dazu mehrere elektrische Kontakte, welche jeweils mit einer entsprechenden elektrischen Leitung der mehreren elektrischen Leitungen des Fahrzeugs verbunden sind. Bei dem Verfahren wird eine fahrzeugseitige Zuordnung zwischen den elektrischen Leitungen und den elektrischen Kontakten der zweiten Verbindungsvorrichtung bestimmt. Die fahrzeugseitige Zuordnung definiert daher, welche elektrische Leitung mit welchem elektrischen Kontakt der zweiten Verbindungsvorrichtung verbunden ist. In Abhängigkeit von dieser so bestimmten fahrzeugseitigen Zuordnung wird das Steuergerät bereitgestellt. Das Steuergerät kann beispielsweise ein Motorsteuergerät oder ein Getriebesteuergerät des Fahrzeugs sein. Üblicherweise besteht fahrzeugseitig eine feste Zuordnung zwischen den elektrischen Leitungen, welche unterschiedliche elektrische Signale, wie z.B. ein Drehzahlsignal, ein Kurbelwellenpositionssignal, ein Zündungssignal usw. übertragen, und den elektrischen Kontakten der Verbindungsvorrichtung, d.h. den Positionen der elektrischen Kontakte an der Verbindungsvorrichtung. Das Steuergerät, welches über die zweite Verbindungsvorrichtung mit dem Fahrzeug gekoppelt wird, erwartet daher üblicherweise auch immer an den gleichen Eingangskontakten die entsprechend vordefinierten Signale. Beispielsweise kann eine Verbindungsvorrichtung (d.h. die zweite Verbindungsvorrichtung) des Fahrzeugs eine Vielzahl von Kontaktbuchsen aufweisen, beispielsweise 80 Stück. Dementsprechend kann die Verbindungsvorrichtung des Steuergeräts (d.h. die erste Verbindungsvorrichtung) eine entsprechende Anzahl von Steckkontakten aufweisen, beispielsweise 80. Erfindungsgemäß ist die fahrzeugseitige Zuordnung der elektrischen Leitungen zu den elektrischen Kontakten bzw. zu den Positionen der elektrischen Kontakte nicht vorgegeben, sondern kann beispielsweise zufällig oder zumindest pseudo-zufällig sein. Dies kann beispielsweise dadurch erreicht werden, dass die elektrischen Kontakte, welche mit den elektrischen Leitungen eines Kabelbaums verbunden sind, zufällig oder pseudo-zufällig in entsprechende Positionen der zweiten Verbindungsvorrichtung eingesetzt werden. Dies muss nicht alle elektrischen Kontakte der zweiten Verbindungsvorrichtung betreffen, sondern kann beispielsweise auf eine Untermenge der elektrischen Kontakte der Verbindungsvorrichtung beschränkt werden. Beispielsweise können eine vorbestimmte Anzahl von elektrischen Kontakten auf die zuvor beschriebene zufällige oder pseudo-zufällige Art und Weise zugeordnet werden. Diese Untermenge kann beispielsweise 5 elektrische Kontakte betreffen, so dass es insgesamt 120 verschiedene Möglichkeiten gibt, wie die 5 elektrischen Leitungen den 5 elektrischen Kontakten zugeordnet sein können. Bei der Ausrüstung des Fahrzeugs mit dem Steuergerät wird daher zunächst die fahrzeugseitige Zuordnung bestimmt und ein entsprechendes Steuergerät bereitgestellt. Wenn das Fahrzeug nach der Auslieferung einem Diebstahlversuch unterzogen wird und der Fahrzeugdieb versucht, das Steuergerät durch ein manipuliertes Steuergerät zu ersetzen, benötigt er zunächst eine Information bezüglich der fahrzeugseitigen Zuordnung, um ein entsprechendes manipuliertes Steuergerät bereitstellen zu können. Wenn das manipulierte Steuergerät nicht zu der fahrzeugseitigen Zuordnung passt, kann der Fahrzeugdieb das Fahrzeug mit dem manipulierten Steuergerät nicht in Betrieb nehmen. Da die Anzahl der möglichen Zuordnungen mit der Anzahl der elektrischen Kontakte, welche zufällig oder pseudo-zufällig verwendet werden, dramatisch ansteigt, ist es für einen Fahrzeugdieb sehr aufwändig, ein entsprechend geeignetes manipuliertes Steuergerät bereitzustellen. Der Fahrzeugdieb muss dazu entweder eine Vielzahl unterschiedlicher manipulierter Steuergeräte mit sich führen und diese der Reihe nach ausprobieren, oder er kann ein konfigurierbares manipuliertes Steuergerät verwenden, muss dann jedoch eine Vielzahl von möglichen Zuordnungen ausprobieren, bevor das manipulierte Steuergerät zum Betrieb des Fahrzeugs geeignet ist. Dies kostet zusätzliche Zeit, welche einem Fahrzeugdieb beim Diebstahl des Fahrzeugs üblicherweise nur begrenzt zur Verfügung steht. Dadurch kann ein Diebstahlschutz erheblich verbessert werden.

Das Steuergerät kann beispielsweise bereitgestellt werden, indem ein konfigurierbares Steuergerät bereitgestellt wird, welches abhängig von der fahrzeugseitigen Zuordnung konfiguriert wird und dann in das Fahrzeug eingebaut wird. Alternativ kann es eine Gruppe von Steuergeräten geben, welche für jede Zuordnung ein eigenes Steuergerät, beispielsweise mit einer eigenen Produktnummer, bereitstellt, und abhängig von der fahrzeugseitigen Zuordnung wird das Steuergerät aus einer Gruppe von Steuergeräten ausgewählt, welches zu der fahrzeugseitigen Zuordnung passt. Die Steuergeräte aus der Gruppe der Steuergeräte weisen jeweils dieselbe erste Verbindungsvorrichtung auf, wobei jedoch eine Signalzuordnung zu den Kontakten der ersten Verbindungsvorrichtung jeweils unterschiedlich ist.

Gemäß einer Ausführungsform wird die fahrzeugseitige Zuordnung bestimmt, indem vorgegebene Testsignale auf die elektrischen Leitungen des Fahrzeugs eingespeist werden. Während der Produktion des Fahrzeugs ist dies auf einfache Art und Weise möglich und kann beispielsweise auch im Rahmen eines Tests des Kabelbaums, welcher die Leitungen zu dem Steuergerät bündelt, durchgeführt werden. Dadurch ist es während der Produktion des Fahrzeugs auf einfache Art und Weise möglich, die fahrzeugseitige Zuordnung festzustellen.

Gemäß einer Ausführungsform ist einer jeweiligen elektrischen Leitung des Fahrzeugs ein jeweiliges Informationssignal zugeordnet. Wie zuvor beschrieben, kann ein derartiges Informationssignal beispielsweise ein Drehzahlsignal eines Verbrennungsmotors des Fahrzeugs, ein Kurbelwellen- oder Nockenwellenpositionssignal des Verbrennungsmotors, ein Zündungssignal, ein Geschwindigkeitssignal des Fahrzeugs oder dergleichen umfassen. Die erste Verbindungsvorrichtung, d.h. die steuergerätseitige Verbindungsvorrichtung, umfasst mehrere elektrische Kontakte, welche mit den entsprechenden mehreren elektrischen Kontakten der zweiten Verbindungsvorrichtung, d.h. der fahrzeugseitigen Verbindungsvorrichtung, in Kontakt sind, wenn die erste Verbindungsvorrichtung und die zweite Verbindungsvorrichtung gekoppelt sind. Um das Steuergerät bereitzustellen, wird ein Steuergerät aus einer Gruppe von Steuergeräten in Abhängigkeit von der fahrzeugseitigen Zuordnung ausgewählt. Die Gruppe von Steuergeräten umfasst zumindest ein erstes Steuergerät und ein zweites Steuergerät. Das erste Steuergerät weist eine feste erste steuergeräteseitige Zuordnung der Informationssignale zu den elektrischen Kontakten der ersten Verbindungsvorrichtung auf. Das zweite Steuergerät weist eine feste zweite steuergeräteseitige Zuordnung der Informationssignale zu den elektrischen Kontakten der ersten Verbindungsvorrichtung auf. Die erste steuergeräteseitige Zuordnung und die zweite steuergeräteseitige Zuordnung sind unterschiedlich. Anders ausgedrückt weisen die Steuergeräte der Gruppe von Steuergeräten jeweils eine gleiche erste Verbindungsvorrichtung mit elektrischen Kontakten auf. Die einzelnen Steuergeräte der Gruppe von Steuergeräten unterscheiden sich dadurch, dass die Zuordnung der Informationssignale zu den elektrischen Kontakten der ersten Verbindungsvorrichtung jeweils unterschiedlich ist. Wenn die elektrischen Kontakte der ersten Verbindungsvorrichtung beispielsweise durchnummeriert sind und, wie zuvor beschrieben, fünf elektrische Kontakte mit fünf Informationssignalen zufällig oder pseudo-zufällig belegt sein können, kann beispielsweise ein Umdrehungssignal bei einem Steuergerät auf einem elektrischen Kontakt mit der Nummer 1 liegen, wohingegen das Umdrehungssignal bei einem anderen Steuergerät auf Kontakt Nummer 2 erwartet wird. Bei noch einem weiteren Steuergerät kann das Umdrehungssignal auf Kontakt Nummer 3 erwartet werden und bei noch einem weiteren beispielsweise auf Kontakt Nummer 4 oder 5. Da zuvor die fahrzeugseitige Zuordnung bestimmt wurde, kann ein entsprechendes Steuergerät unter Kenntnis der fahrzeugseitigen Zuordnung einfach ausgewählt werden und in dem Fahrzeug verbaut werden. Ein potentieller Fahrzeugdieb kennt hingegen die fahrzeugseitige Zuordnung nicht und kann daher, selbst wenn er im Besitz aller möglichen Steuergerät aus der Gruppe von Steuergeräten ist, nicht zielgerichtet eines daraus auswählen, sondern muss ausprobieren, bis er ein passendes gefunden hat. Dies kostet Zeit, welche einem Fahrzeugdieb im Allgemeinen nur in sehr begrenzter Form beim Diebstahl zur Verfügung steht.

Gemäß einer weiteren Ausführungsform ist einer jeweiligen elektrischen Leitung ein jeweiliges Informationssignal zugeordnet. Die erste Verbindungsvorrichtung (geräteseitige Verbindungsvorrichtung) umfasst mehrere elektrische Kontakte, welche mit den entsprechenden mehreren elektrischen Kontakten der zweiten Verbindungsvorrichtung (fahrzeugseitige Verbindungsvorrichtung) in Kontakt sind, wenn die erste Verbindungsvorrichtung und die zweite Verbindungsvorrichtung gekoppelt sind. Dann wird ein Steuergerät mit einer konfigurierbaren steuergeräteseitigen Zuordnung der Informationssignale zu den elektrischen Kontakten der ersten Verbindungsvorrichtung bereitgestellt. Anders ausgedrückt wird ein Steuergerät bereitgestellt, bei welchem durch eine Konfiguration festgelegt werden kann, welches Informationssignal welchem elektrischen Kontakt der ersten Verbindungsvorrichtung zugeordnet wird. Die konfigurierbare steuergeräteseitige Zuordnung wird in dem Steuergerät in Abhängigkeit von der zuvor bestimmten fahrzeugseitigen Zuordnung konfiguriert oder eingestellt. Dadurch ist bei der Produktion des Fahrzeugs nur ein Typ von Steuergerät erforderlich, welches dann im Produktionsprozess an das Fahrzeug, insbesondere an die Konfiguration des Kabelbaums, welcher mit der zweiten Verbindungsvorrichtung gekoppelt ist, angepasst wird. Die Konfiguration ist vorzugsweise nicht aus dem Steuergerät auslesbar und daher einem Fahrzeugdieb nicht zugänglich. Einem Fahrzeugdieb bleibt daher nichts anderes übrig, als entweder, wie zuvor beschrieben, eine Vielzahl unterschiedlicher vorkonfigurierter Steuergeräte auszuprobieren oder er ist im Besitz eines konfigurierbaren Steuergeräts, bei welchem er dann durch Ändern der Konfiguration und Ausprobieren des Steuergeräts in dem Fahrzeug die richtige Zuordnung herausfinden muss. Dies kostet den Fahrzeugdieb sehr viel Zeit, wodurch der Diebstahl des Fahrzeugs erschwert wird. Um die Anzahl der Kombinationen zu erhöhen, können auch mehr als fünf Leitungen zufällig oder pseudo-zufällig vertauscht werden. Da die Anzahl der Kombinationen mit der Fakultät der Anzahl der Leitungen ansteigt, kann durch geringfügiges Erhöhen der Anzahl der vertauschbaren Leitungen die Anzahl der möglichen Variationen oder Kombinationen dramatisch erhöht werden. Beispielsweise sind bei sechs vertauschbaren Leitungen bereits 720 Kombinationen möglich und bei zehn vertauschbaren Leitungen bereits 3,6 Mio., so dass es einem Fahrzeugdieb fast unmöglich ist, in endlicher Zeit die fahrzeugseitige Zuordnung durch Ausprobieren herauszufinden.

Gemäß einer weiteren Ausführungsform wird, nachdem die konfigurierbare steuergeräteseitige Zuordnung in dem Steuergerät einmal konfiguriert wurde, automatisch in dem Steuergerät verhindert, dass die steuergeräteseitige Zuordnung erneut konfiguriert werden kann. Dies kann beispielsweise dadurch geschehen, dass der Programmcode zum Konfigurieren der steuergeräteseitigen Zuordnung in dem Steuergerät nach der ersten Konfiguration automatisch gelöscht wird. Dadurch kann verhindert werden, dass ein Fahrzeugdieb ein Originalsteuergerät, für das er beispielsweise eine Authentifizierungsinformation besitzt, als Ersatz in dem zu stehlenden Fahrzeug verwendet und durch Ausprobieren verschiedener Konfigurationen zu einem funktionsfähigen Fahrzeug gelangt.

Gemäß einer weiteren Ausführungsform wird das Bestimmen der fahrzeugseitigen Zuordnung mit Hilfe des Steuergeräts durchgeführt. Dazu wird die zweite Verbindungsvorrichtung (fahrzeugseitige Verbindungsvorrichtung) mit der ersten Verbindungsvorrichtung (steuergeräteseitige Verbindungsvorrichtung) des Steuergeräts verbunden und ein spezieller Code in dem Steuergerät verwendet, um die fahrzeugseitige Zuordnung zu ermitteln. Dazu können, wie zuvor beschrieben, spezielle Testsignale auf die Leitungen des Fahrzeugs, welche über die erste und zweite Verbindungsvorrichtung mit dem Steuergerät gekoppelt sind, eingespeist werden und das Steuergerät kann anhand der Signale die fahrzeugseitige Zuordnung ermitteln. Nach der automatischen Ermittlung der Zuordnung in dem Steuergerät kann das Steuergerät automatisch die steuergeräteseitige Zuordnung konfigurieren und abschließend den gesamten Programmcode für das Ermitteln der fahrzeugseitigen Zuordnung und zum Konfigurieren der steuergeräteseitigen Zuordnung löschen. Darüber hinaus kann das Steuergerät über eine Schnittstelle die fahrzeugseitige Zuordnung ausgeben, damit diese beispielsweise in einem Server des Fahrzeugherstellers gespeichert wird, um bei einem Defekt des Steuergeräts ein entsprechendes Ersatzsteuergerät konfigurieren zu können und dem rechtmäßigen Fahrzeugbesitzer bereitstellen zu können. Auch das Ausgeben der in dem Steuergerät ermittelten fahrzeugseitigen Zuordnung über die Schnittstelle des Steuergeräts kann automatisch nach einem einmaligen Ausgeben verhindert werden, indem beispielsweise der entsprechende Programmcode gelöscht wird. Indem die fahrzeugseitige Zuordnung in dem Steuergerät automatisch ermittelt wird, kann das Ausrüsten des Fahrzeugs mit dem Steuergerät verfahrenstechnisch sehr einfach durchgeführt werden.

Gemäß einer weiteren Ausführungsform wird die fahrzeugseitige Zuordnung bestimmt, indem die zweite Verbindungsvorrichtung (fahrzeugseitige Verbindungsvorrichtung) mit einer fahrzeugexternen Zuordnungsbestimmungsvorrichtung verbunden wird. Die Zuordnungsbestimmungsvorrichtung bestimmt dann die fahrzeugseitige Zuordnung, beispielsweise indem auf den Leitungen des Fahrzeugs vorbestimmte Testsignale eingespielt werden, welche die Zuordnungsbestimmungsvorrichtung empfängt und daraus die fahrzeugseitige Zuordnung ermittelt. Die so bestimmte fahrzeugseitige Zuordnung kann von der Zuordnungsbestimmungsvorrichtung beispielsweise zu einem Server des Fahrzeugherstellers übertragen werden, worin die fahrzeugseitige Zuordnung gespeichert und verwendet wird, um, wie zuvor beschrieben, wahlweise ein konfigurierbares Steuergerät zu konfigurieren oder ein Steuergerät mit einer entsprechenden geräteseitigen Zuordnung aus einer Gruppe von Steuergeräten auszuwählen. Das konfigurierte oder ausgewählte Steuergerät kann dann in das Fahrzeug eingebaut werden.

Gemäß der vorliegenden Erfindung wird weiterhin ein Steuergerät für ein Fahrzeug bereitgestellt. Das Steuergerät umfasst eine erste Verbindungsvorrichtung, welche mit einer zweiten Verbindungsvorrichtung des Fahrzeugs koppelbar ist, um mehrere elektrische Leitungen des Fahrzeugs mit dem Steuergerät elektrisch zu koppeln. Die zweite Verbindungsvorrichtung umfasst mehrere elektrische Kontakte, welche jeweils mit einer elektrischen Leitung der mehreren elektrischen Leitungen verbunden sind. Eine fahrzeugseitige Zuordnung definiert, welche elektrische Leitung mit welchem elektrischen Kontakt der zweiten Verbindungsvorrichtung verbunden ist. Einer jeweiligen elektrischen Leitung ist ein jeweiliges Informationssignal zugeordnet. Die erste Verbindungsvorrichtung umfasst ebenfalls mehrere elektrische Kontakte. Wenn die erste Verbindungsvorrichtung und die zweite Verbindungsvorrichtung miteinander gekoppelt sind, sind die mehreren elektrischen Kontakte der ersten Verbindungsvorrichtung mit den entsprechenden mehreren elektrischen Kontakten der zweiten Verbindungsvorrichtung in Kontakt. Das Steuergerät umfasst weiterhin eine Verarbeitungsvorrichtung, welche in der Lage ist, eine steuergeräteseitige Zuordnung der Informationssignale zu den elektrischen Kontakten der ersten Verbindungsvorrichtung in Abhängigkeit von der fahrzeugseitigen Zuordnung zu konfigurieren. Das Steuergerät ist daher zur Durchführung des zuvor beschriebenen Verfahrens und seiner Ausführungsform geeignet und umfasst daher auch die zuvor beschriebenen Vorteile.

Gemäß der vorliegenden Erfindung wird weiterhin ein Fahrzeug mit dem zuvor beschriebenen Steuergerät bereitgestellt, welches daher ebenfalls die zuvor beschriebenen Vorteile des erhöhten Diebstahlschutzes aufweist.

Die vorliegende Erfindung wird nachfolgend unter Bezugnahme auf die beigefügte Zeichnung im Detail beschrieben werden.
Fig. 1 zeigt ein Fahrzeug gemäß einer Ausführungsform der vorliegenden Erfindung.
Fig. 2 zeigt eine Verkabelung eines Fahrzeugs und ein Steuergerät gemäß einer Ausführungsform der vorliegenden Erfindung.
Fig. 3 zeigt eine weitere Verkabelung eines Fahrzeugs und ein Steuergerät gemäß einer Ausführungsform der vorliegenden Erfindung.
Fig. 4 zeigt Verfahrensschritte eines Verfahrens gemäß einer Ausführungsform der vorliegenden Erfindung.

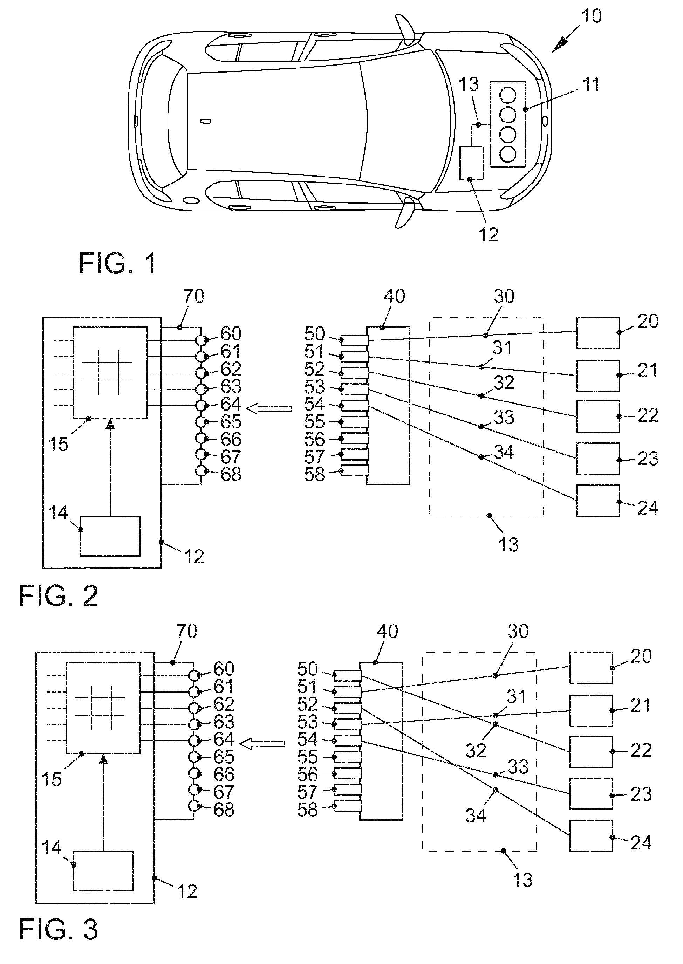

Fig. 1 zeigt ein Fahrzeug 10 mit einem Antriebsmotor 11, beispielsweise einem Verbrennungsmotor, und einem Steuergerät 12, beispielsweise einem Motorsteuergerät. Das Steuergerät 12 ist über einen Kabelbaum 13 mit elektrischen Komponenten des Motors 11, wie z.B. Sensoren, Steuerleitungen oder Signalleitungen, verbunden. Die Signale und Informationen, welche über den Kabelbaum 13 übertragen werden, können beispielsweise ein Umdrehungssignal einer Drehzahl des Verbrennungsmotors 11, ein Positionssignal einer Kurbelwelle und/oder einer Nockenwelle des Motors 11, ein Zündungssignal, Temperatursignale und dergleichen umfassen. Die Verbindung zwischen dem Kabelbaum 13 und dem Steuergerät 12 ist üblicherweise eine Steckverbindung, welche eine Vielzahl von elektrischen Kontakten aufweist, um die verschiedenen Signale, welche auf verschiedenen Leitungen des Kabelbaums übertragen werden, elektrisch mit entsprechenden Kontakten des Steuergeräts 12 zu koppeln.

Fig. 2 zeigt die Verbindung zwischen den Komponenten des Motors 11 und dem Steuergerät 12 detaillierter. An dem Motor oder in der Umgebung des Motors 11 befinden sich Einheiten 20-24, beispielsweise verschiedene Sensoren oder Signalquellen oder Signalsenken, welche über jeweils zugeordnete elektrische Leitungen 30-34 die zuvor beschriebenen Signale, beispielsweise Drehzahlsignal, Zündungssignal usw., bereitstellen. Die Leitungen 30-34 sind in dem Kabelbaum 13 zusammengefasst und werden in geeigneter Art und Weise von dem Motor 11 zu dem Steuergerät 12 geführt. Am Ende des Kabelbaums 13 befindet sich ein fahrzeugseitiger Verbinder 40, welcher in den Ansprüchen als zweite Verbindungsvorrichtung bezeichnet wird. Der Verbinder 40 weist mehrere elektrische Kontakte 50-58 zur Übertragung von Informationssignalen auf. Beispielhaft sind in der Fig. 2 lediglich die elektrischen Kontakte 50-54 verschaltet gezeichnet, die Kontakte 55-58 sind jedoch ebenfall mit entsprechenden Leitungen des Kabelbaums 13 verbunden, was aber aus Übersichtlichkeitsgründen in der Fig. 2 nicht dargestellt ist. Der Verbinder 40 kann erheblich mehr elektrische Kontakte als die gezeigten neun Kontakte aufweisen, beispielsweise 20-100. Darüber hinaus kann der Verbinder 40 auch elektrische Kontakte zur Übertragung elektrischer Energie zur Versorgung des Steuergeräts 12 mit elektrischer Energie aufweisen. An dem Steuergerät 12 befindet sich ein zu dem Verbinder 40 passender Verbinder 70, welcher in den Ansprüchen als erste Verbindungsvorrichtung bezeichnet wird. Der Verbinder 70 weist elektrische Kontakte 60-68 auf, welche, wenn die Verbinder 40 und 70 miteinander gekoppelt sind, elektrische Verbindungen zu den elektrischen Kontakten 50-58 herstellen. Beispielsweise können die elektrischen Kontakte 60-68 buchsenförmig ausgebildet sein und die elektrischen Kontakte 50-58 steckerförmig, so dass diese miteinander in Eingriff gebracht werden können. Wenn die Verbinder 40 und 70 miteinander in Eingriff gebracht werden können. Wenn die Verbinder 40 und 70 miteinander verbunden sind, entsteht ein elektrischer Kontakt zwischen den elektrischen Kontakten 50 und 60 und ein weiterer Kontakt zwischen den Kontakten 51 und 61 usw. Elektrische Leitungen innerhalb des Steuergeräts 12 verbinden die elektrischen Kontakte 60-68 mit elektrischen Komponenten innerhalb des Steuergeräts 12.

Um das Fahrzeug 10 vor einem Diebstahl zu schützen, ist in dem Steuergerät 12 vorgesehen, dass dies nur dann seinen Betrieb aufnimmt, wenn sich der Benutzer gegenüber dem Steuergerät 12 mit beispielsweise einem Transponder als rechtmäßiger Benutzer des Fahrzeugs 10 authentifiziert. Derartige Mechanismen sind in dem Stand der Technik bekannt und sollen daher hier nicht weiter im Detail beschrieben werden. Um diesen Diebstahlschutz zu umgehen, verwenden Fahrzeugdiebe häufig manipulierte Steuergeräte, bei denen entweder keine Authentifizierung erforderlich ist oder für welche die Fahrzeugdiebe entsprechende Authentifizierungsmittel besitzen. Der Fahrzeugdieb tauscht dann lediglich das Steuergerät 12 gegen ein entsprechend manipuliertes Steuergerät 12 aus und kann dann das Fahrzeug 10 in Betrieb nehmen. Um dies zu erschweren oder zu verhindern, ist vorgesehen, dass die fahrzeugsseitige Zuordnung zwischen den Leitungen 30-34 und den elektrischen Kontakten 50-54 variabel ist und während der Fertigung des Fahrzeugs 10 im Wesentlichen zufällig oder pseudo-zufällig zugeordnet wird.

Fig. 3 zeigt daher einen Kabelbaum 13 und einen Verbinder 40, bei welchem die Zuordnung der Leitungen 30-34 zu den elektrischen Kontakten 50-54 unterschiedlich zu der Zuordnung der elektrischen Leitungen 30-34 zu den elektrischen Kontakten 50-54 der Fig. 2 ist. Beispielsweise wird in Fig. 2 ein Signal von der Einheit 20 über die elektrische Leitung 30 an dem elektrischen Kontakt 50 bereitgestellt. In Fig. 3 hingegen wird das Signal von der Einheit 20 über die elektrische Leitung 30 an dem elektrischen Kontakt 51 bereitgestellt. In Fig. 2 wird ein Signal von der Einheit 21 über die elektrische Leitung 31 an den elektrischen Kontakt 51 bereitgestellt, wohingegen in Fig. 3 dasselbe Signal an dem elektrischen Kontakt 53 bereitgestellt wird.

Diese unterschiedlichen Zuordnungen müssen dem Steuergerät 12 bekannt sein, damit das Steuergerät 12 ordnungsgemäß arbeiten kann und die zugeführten Signale von den Einheiten 20-24 in geeigneter Art und Weise beispielsweise einem Mikroprozessor in dem Steuergerät 12 zuführen kann. Dazu umfasst das Steuergerät 12 beispielsweise eine Verarbeitungsvorrichtung 14, welche mit einem Koppelfeld 15 verbunden ist, welches in der Lage ist, Signale umzurangieren. Sofern die Verarbeitungsvorrichtung 14 die fahrzeugseitige Zuordnung zwischen den Leitungen 30-34 und den elektrischen Kontakten 50-54 kennt, kann sie das Koppelfeld 15 entsprechend konfigurieren, so dass die über die elektrischen Kontakte 60-64 des Verbinders 70 empfangenen Informationen an die richtigen Stellen innerhalb des Steuergeräts 12 weitergeleitet werden können. In den Fig. 2 und 3 ist das Koppelfeld 15 als eine eigene Einheit dargestellt. Alternativ kann beispielsweise in dem Steuergerät 12 ein Mikroprozessor mit einer Vielzahl universeller Eingänge verwendet werden, welche fest mit den Kontakten 60-64 verbunden sind. Programmtechnisch kann dann unter Kenntnis der fahrzeugseitigen Zuordnung eine steuergeräteseitige Zuordnung von Anschlüssen des Mikroprozessors zu entsprechenden internen Verarbeitungen durchgeführt werden, so dass keine zusätzliche Hardware, wie das in den Fig. 2 und 3 gezeigte Koppelfeld 15 erforderlich ist.

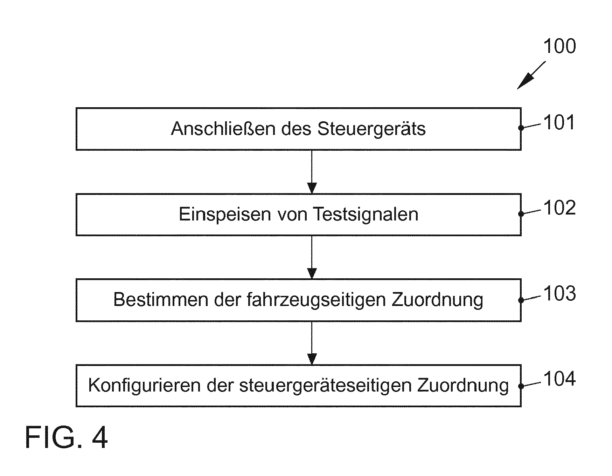

Ein Verfahren 100 zum Ausrüsten des Fahrzeugs 10 mit dem Steuergerät 12 wird nachfolgend unter Bezugnahme auf Fig. 4 beschrieben werden. Das schematische Verfahren 100 umfasst Verfahrensschritte 101-104. Im Schritt 101 wird das Steuergerät 12 in dem Fahrzeug 10 an den Verbinder 40 des Kabelbaums 13 angeschlossen. Mit Hilfe einer speziellen Vorrichtung, welche beispielsweise mit dem anderen Ende des Kabelbaums 13, also statt der Einheiten 20-24, angeschlossen wird, werden im Schritt 102 Testsignale auf die Leitungen 30-34 eingespeist. Beispielsweise können spezielle Signalmuster oder spezielle Signalpegel oder Signale mit speziellen Frequenzen oder sonstigen Eigenschaften auf die Leitungen 30-34 eingespeist werden. Das Steuergerät 12 empfängt die eingespeisten Testsignale über die elektrischen Kontakte 60-64, wobei jedoch zu diesem Zeitpunkt noch nicht klar ist, welcher Kontakt der Kontakte 60-64 mit welcher der Leitungen 30-34 gekoppelt ist. Durch Auswerten der Testsignale in dem Steuergerät kann das Steuergerät jedoch die fahrzeugseitige Zuordnung der Leitungen 30-34 zu den Kontakten 50-54 und somit zu den Kontakten 60-64 bestimmen (Schritt 103). Unter Kenntnis der fahrzeugseitigen Zuordnung kann das Steuergerät 12 schließlich die steuergeräteseitige Zuordnung konfigurieren (Schritt 104), so dass das Steuergerät 12 nun an die Konfiguration oder Zuordnung des Kabelbaums 13 und Verbinders 40 angepasst ist. Anstatt im Schritt 101 das Steuergerät 12 mit dem Verbinder 40 zu koppeln, kann alternativ eine Zuordnungsbestimmungsvorrichtung mit dem Verbinder 40 gekoppelt werden, welche nach Einspeisen der Testsignale im Schritt 102 die fahrzeugseitige Zuordnung im Schritt 103 bestimmen kann. Diese Zuordnung kann die Zuordnungsbestimmungsvorrichtung über eine geeignete Schnittstelle an das Steuergerät 12 ausgeben, welches daraufhin die steuergeräteseitige Zuordnung im Schritt 104 auf dieser Grundlage konfiguriert. Zusätzlich kann die fahrzeugseitige Zuordnung in einem Server des Fahrzeugherstellers gespeichert werden, um bei einem Defekt des Steuergeräts 12 ein Ersatzgerät entsprechend konfigurieren zu können und dem rechtmäßigen Fahrzeugbesitzer bereitstellen zu können.

Statt eines konfigurierbaren Steuergeräts 12, kann auch ein Vorrat mit einer Vielzahl unterschiedlicher Steuergeräte bereitgestellt werden, welche jeweils eine feste steuergeräteseitige Zuordnung aufweisen. Nachdem mit der Zuordnungsbestimmungsvorrichtung die fahrzeugseitige Zuordnung im Schritt 103 bestimmt wurde, wird dann statt des Konfigurierens des konfigurierbaren Steuergeräts ein geeignetes Steuergerät aus dem Vorrat ausgewählt, welches eine entsprechende steuergeräteseitige Zuordnung aufweist. Dieses ausgewählte Steuergerät kann dann in das Fahrzeug eingebaut werden und in Verbindung mit dem Kabelbaum und dem Verbinder 40 und der damit verbundenen fahrzeugseitigen Zuordnung verwendet werden.

### Bezugszeichenliste

- 10: Fahrzeug
- 11: Motor
- 12: Steuergerät
- 13: Kabelbaum
- 14: Verarbeitungsvorrichtung
- 15: Koppelfeld
- 20-24: Einheiten
- 30-34: Leitungen
- 40: Zweite Verbindungsvorrichtung
- 50-58: Elektrische Kontakte der zweiten Verbindungsvorrichtung
- 60-68: Elektrische Kontakte der ersten Verbindungsvorrichtung
- 70: Erste Verbindungsvorrichtung
- 100: Verfahren
- 101-104: Verfahrensschritte

## Patentansprüche

1. Verfahren zum Ausrüsten eines Fahrzeugs mit einem Steuergerät, wobei das Steuergerät (12) eine erste Verbindungsvorrichtung (70) umfasst, welche mit einer zweiten Verbindungsvorrichtung (40) des Fahrzeugs (10) koppelbar ist, um mehrere elektrische Leitungen (30-34) des Fahrzeugs (10) mit dem Steuergerät (12) elektrisch zu koppeln, wobei die zweite Verbindungsvorrichtung (40) mehrere elektrische Kontakte (50-54) umfasst, welche jeweils mit einer elektrischen Leitung (30-34) der mehreren elektrischen Leitungen (30-34) verbunden sind, wobei das Verfahren (100) **gekennzeichnet ist durch** die Schritte:
- Bestimmen (103) einer fahrzeugseitigen Zuordnung, die definiert, welche elektrische Leitung (30-34) mit welchem elektrischen Kontakt (50-54) der zweiten Verbindungsvorrichtung (40) verbunden ist, und
- Bereitstellen (104) des Steuergeräts (12) in Abhängigkeit von der fahrzeugseitigen Zuordnung.

2. Verfahren nach Anspruch 1, **dadurch gekennzeichnet, dass** das Bestimmen (103) der fahrzeugseitigen Zuordnung umfasst:
- Einspeisen (102) von vorgegeben Testsignalen auf die elektrischen Leitungen (30-34).

3. Verfahren nach Anspruch 1 oder Anspruch 2, **dadurch gekennzeichnet, dass** das bereitgestellte Steuergerät (12) abhängig von der fahrzeugseitigen Zuordnung konfiguriert wird oder abhängig von der fahrzeugseitigen Zuordnung aus einer Gruppe von Steuergeräten, die jeweils dieselbe erste Verbindungsvorrichtung (70) aufweisen, ausgewählt wird.

4. Verfahren nach einem der Ansprüche 1-3, wobei einer jeweiligen elektrischen Leitung (30-34) ein jeweiliges Informationssignal zugeordnet ist, wobei die erste Verbindungsvorrichtung (70) mehrere elektrische Kontakte (60-64) umfasst, welche mit den entsprechenden mehreren elektrischen Kontakten (50-54) der zweiten Verbindungsvorrichtung (40) in Kontakt sind, wenn die erste Verbindungsvorrichtung (70) und die zweite Verbindungsvorrichtung (40) gekoppelt sind,
**dadurch gekennzeichnet, dass** das Bereitstellen des Steuergeräts umfasst:
- Auswählen eines Steuergeräts (12) aus einer Gruppe von Steuergeräten in Abhängigkeit von der fahrzeugseitigen Zuordnung, wobei die Gruppe von Steuergeräten zumindest ein erstes Steuergerät und ein zweites Steuergerät umfasst, wobei das erste Steuergerät eine erste steuergeräteseitige Zuordnung der Informationssignale zu den elektrischen Kontakten (60-64) der ersten Verbindungsvorrichtung (70) aufweist und wobei das zweite Steuergerät eine zweite steuergeräteseitige Zuordnung der Informationssignale zu den elektrischen Kontakten (60-64) der ersten Verbindungsvorrichtung (70) aufweist, wobei die erste steuergeräteseitige Zuordnung und die zweite steuergeräteseitige Zuordnung unterschiedlich sind.

5. Verfahren nach einem der Ansprüche 1-3, wobei einer jeweiligen elektrischen Leitung (30-34) ein jeweiliges Informationssignal zugeordnet ist, wobei die erste Verbindungsvorrichtung (70) mehrere elektrische Kontakte (60-64) umfasst, welche mit den entsprechenden mehreren elektrischen Kontakten (50-54) der zweiten Verbindungsvorrichtung (40) in Kontakt sind, wenn die erste Verbindungsvorrichtung (70) und die zweite Verbindungsvorrichtung (40) gekoppelt sind,
**dadurch gekennzeichnet, dass** das Bereitstellen des Steuergeräts (12) umfasst:
- Bereitstellen eines Steuergeräts (12) mit einer konfigurierbaren steuergeräteseitigen Zuordnung der Informationssignale zu den elektrischen Kontakten (60-64) der ersten Verbindungsvorrichtung (70), und
- Konfigurieren (104) der konfigurierbaren steuergeräteseitigen Zuordnung in dem Steuergerät (12) in Abhängigkeit von der fahrzeugseitigen Zuordnung.

6. Verfahren nach Anspruch 5, **dadurch gekennzeichnet, dass** das Verfahren ferner umfasst:
- automatisches Verhindern des Konfigurierens der konfigurierbaren steuergeräteseitigen Zuordnung in dem Steuergerät (12) nachdem die konfigurierbare steuergeräteseitige Zuordnung in dem Steuergerät (12) einmal konfiguriert wurde.

7. Verfahren nach Anspruch 5 oder 6, **dadurch gekennzeichnet, dass** das Bestimmen der fahrzeugseitigen Zuordnung umfasst:
- Verbinden der zweiten Verbindungsvorrichtung (40) mit der ersten Verbindungsvorrichtung (70), und
- Bestimmen der fahrzeugseitigen Zuordnung mittels des Steuergeräts (12).

8. Verfahren nach einem der Ansprüche 1-6, **dadurch gekennzeichnet, dass** das Bestimmen der fahrzeugseitigen Zuordnung umfasst:
- Verbinden der zweiten Verbindungsvorrichtung (40) mit einer fahrzeugexternen Zuordnungsbestimmungsvorrichtung, und
- Bestimmen der fahrzeugseitigen Zuordnung mittels der Zuordnungsbestimmungsvorrichtung.

9. Steuergerät für ein Fahrzeug, umfassend:
- eine erste Verbindungsvorrichtung (70), welche mit einer zweiten Verbindungsvorrichtung (40) des Fahrzeugs (10) koppelbar ist, um mehrere elektrische Leitungen (30-34) des Fahrzeugs (10) mit dem Steuergerät (12) elektrisch zu koppeln, wobei die zweite Verbindungsvorrichtung (40) mehrere elektrische Kontakte (50-54) umfasst, welche jeweils mit einer elektrischen Leitung (30-34) der mehreren elektrischen Leitungen (30-34) verbunden sind, wobei eine fahrzeugseitige Zuordnung definiert, welche elektrische Leitung (30-34) mit welchem elektrischen Kontakt (50-54) der zweiten Verbindungsvorrichtung (40) verbunden ist, wobei einer jeweiligen elektrischen Leitung (30-34) ein jeweiliges Informationssignal zugeordnet ist, wobei die erste Verbindungsvorrichtung (70) mehrere elektrische Kontakte (60-64) umfasst, welche mit den entsprechenden mehreren elektrischen Kontakten (50-54) der zweiten Verbindungsvorrichtung (40) in Kontakt sind, wenn die erste Verbindungsvorrichtung (70) und die zweite Verbindungsvorrichtung (40) gekoppelt sind, **gekennzeichnet durch**
- eine Verarbeitungsvorrichtung (14), welche ausgestaltet ist, eine steuergeräteseitige Zuordnung der Informationssignale zu den elektrischen Kontakten (60-64) der ersten Verbindungsvorrichtung (70) in Abhängigkeit von der fahrzeugseitigen Zuordnung zu konfigurieren.

10. Fahrzeug mit einem Steuergerät (12) nach Anspruch 9.
